Europäisches Patentamt

European Patent Office

Office européen des brevets

(11) Publication number: **0 346 300**
**A1**

## (12) EUROPEAN PATENT APPLICATION

(21) Application number: **89830249.2**

(22) Date of filing: **06.06.89**

(51) Int. Cl.⁴: **A 42 B 3/00**
**F 16 P 3/00**

(30) Priority: **10.06.88 IT 6755688**

(43) Date of publication of application:
**13.12.89 Bulletin 89/50**

(84) Designated Contracting States:
**AT BE CH DE ES FR GB GR IT LI LU NL SE**

(71) Applicant: **I.DE.A. S.p.A. INSTITUTE OF DEVELOPMENT IN AUTOMOTIVE ENGINEERING**
**Via Ferrero di Cambiano, 32**
**I-10024 Moncalieri (Torino) (IT)**

(72) Inventor: **Bossi, Piero**
**Via dei Mercanti, 2**
**I-10122 Torino (IT)**

(74) Representative: **Buzzi, Franco et al**
**c/o Jacobacci-Casetta & Perani S.p.A. Via Alfieri, 17**
**I-10121 Torino (IT)**

(54) A safety device for preventing the use of a motor cycle, particularly a moped, by a user without a helmet.

(57) A safety device, associated with a protective helmet (H), for preventing the operation of the engine (E) of a vehicle, particularly a moped (M), when the driver is not wearing the helmet (H). The device comprises a transmitter unit (1) which is incorporated in the helmet (H) and includes sensors (10) for detecting the fact that the helmet (H) is being worn and for activating an emitter (3) of coded signals and a receiver unit (2) which is fitted to the vehicle and includes a receiver (16) for the coded signals, and means for preventing the operation of the engine (E), which means are switched on in the absence of the coded signals.

EP 0 346 300 A1

## Description

**A safety device for preventing the use of a motor cycle, particularly a moped, by a user without a helmet**

The subject of the invention is a safety device for the users of vehicles, particularly motor cycles and mopeds, the driving of which makes the use of a protective helmet necessary or advisable.

The object of the invention is to produce a safety device which prevents the use of the vehicle, regardless of the wishes of the user, whenever the protective helmet has not been put on.

According to the invention, this object is achieved by means of a safety device characterised in that it comprises prevention means for preventing the operation of the vehicle and means associated with the helmet for deactivating the prevention means when the helmet is being worn.

Normally the deactivating means are constituted by a transmitter unit incorporated in the helmet and the prevention means are constituted by a receiver unit fitted to the vehicle.

The transmitter unit, which has an electrical supply, normally comprises emitter means for emitting coded signals, sensor means for detecting the fact that the helmet is being worn, and a control unit connected to the sensor means and to the emitter means and arranged to switch on the emitter means only when the sensor means detect the fact that the helmet is being worn. The receiver unit also has an electrical supply and normally comprises receiver means for receiving the coded signals, prevention means for preventing the operation of the vehicle engine, and a control unit which is connected to the receiver means and to the prevention means, and is arranged to activate the prevention means in the absence of the coded signals.

As well as its main and intrinsic advantage of compelling the user to wear the helmet, the device according to the invention has the further advantage that it switches the vehicle engine off automatically when the user removes his helmet or moves away from the vehicle. This is a useful theft-prevention and anti-robbery measure and at the same time ensures greater safety in the event of an accident in which the user is thrown off the vehicle and greater convenience when he needs to dismount the vehicle frequently.

Moreover, the coding of the signals transmitted between the transmitter unit and the receiver unit may be arranged to give a personalised combination of the helmet and the vehicle, preventing the unauthorised starting of the engine or its accidental stoppage by means of another helmet with a transmitter unit similar to that provided by the invention.

The electrical supply of the transmitter unit in the helmet preferably comprises a rechargeable buffer battery which can be charged by solar cells fitted directly to the helmet and/or by a mains charger and/or by a supply which can be taken from the electrical supply of the vehicle.

The sensor means of the transmitter unit conveniently comprises a capacitative sensor and an inductive sensor which are adapted to detect the presence of a head correctly positioned within the helmet, with the ability to discriminate between heads and other bodies, and possibly auxiliary detectors for detecting whether the retaining members (chinstrap) with which a helmet is normally provided are fastened.

The prevention means of the receiver unit, which is supplied directly by the electrical supply of the vehicle, conveniently comprise a device for short-circuiting the ignition system of the engine. There may, however, be multiple prevention means which act on various functional parts of the engine so as to make deactivation difficult without the use of the transmitter unit of the helmet.

The receiver unit may also to advantage be provided with an optical or acoustic warning device for indicating that the prevention means are activated so as to inform the user that the failure of the engine to start, or its stoppage, is caused by a failure to wear the helmet.

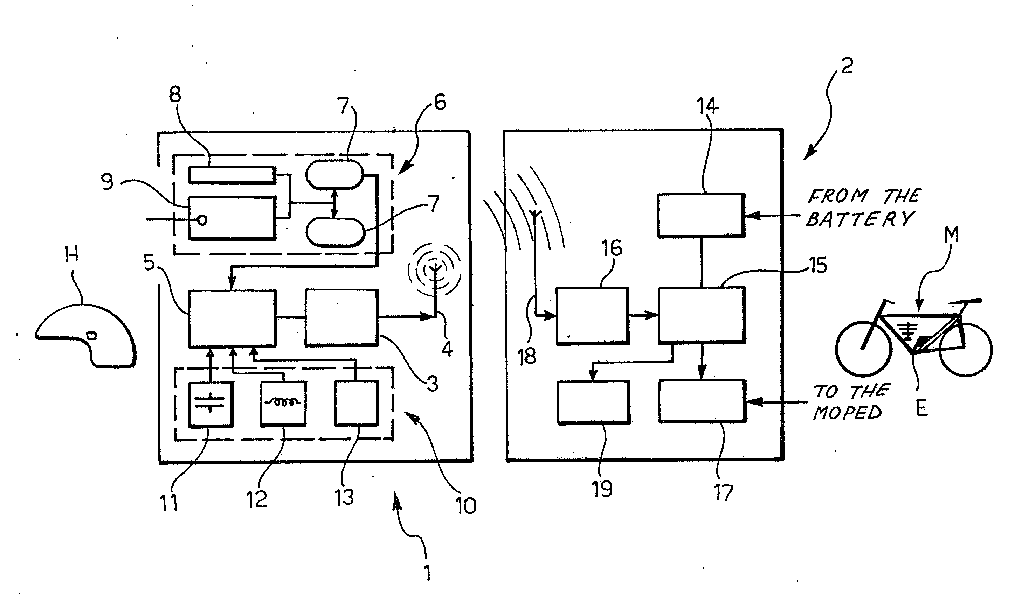

Further characteristics and advantages of the present invention will become clear from the detailed description which follows with reference to the appended drawing, provided by way of non-limiting example, which shows, in the form of a block diagram, a safety device according to the invention fitted to a moped.

In the drawing, the moped and its engine are indicated M and E respectively, and a protective helmet, which is intended to be used by the driver of the moped M, is indicated H.

The safety device according to the invention consists essentially of a transmitter unit 1 incorporated in the helmet H and a receiver unit 2 fitted to the moped M at any convenient place, for example adjacent the engine E.

Briefly, the transmitter unit 1 generates coded signals only if the helmet H is being worn correctly by the user and the receiver unit 2 enables the engine E to operate normally when the coded signals are received. In the absence of the signals (because they are not emitted since the helmet H is not correctly worn, or are not received because of an excessive distance between the correctly-worn helmet H and the moped M), the receiver unit 2 does not enable the engine E to operate, or interrupts its operation.

In the embodiment illustrated, the transmitter unit 1 comprises a coded signal emitter 3 (of radio waves or ultrasound) of limited range (2-3 metres), connected to an antenna 4. The emitter 3 is supplied, through an electronic control unit 5, by an electrical supply unit 6 comprising buffer batteries 7 which are rechargeable by means of solar cells 8 fitted directly to the helmet H and/or by a mains charger 9.

Alternatively, the supply unit 6 may include a charger which can be connected to a battery or other electrical supply fitted to the moped M. According to another alternative, the electrical supply of the transmitter unit 1 may be provided by the electrical supply of the moped M through a connecting cable (not shown) with which the helmet H is equipped.

The transmitter unit 1 also includes a detector unit 10 including electrical sensors which are supplied by the unit 6 and connected to the electronic control unit 5.

The sensors are arranged to detect the presence of a head correctly positioned within the helmet H and comprise, for example, a capacitive sensor 11 and an inductive sensor 12. The former is able to detect electric-field disturbances due to the presence of a head between two plates of a capacitor which are fitted to the inner side walls of the helmet H whilst the latter detects magnetic-field disturbances, also due to the presence of the head in the helmet H. The sensors 11 and 12 send signals indicative of these disturbances to the control unit 5 which, in the presence of the signals, switches on the emitter 3 which in turn generates the coded signals which are emitted by the antenna 4.

The detector unit 10 may also include additional sensors 13, for example for detecting the fastening of the chinstrap or other retaining members with which the helmet H is normally provided and for providing the control unit 5 with corresponding enabling signals.

The receiver unit 2 includes a supply 14, which is connected directly to the electrical supply (battery) of the moped M, and an electronic control unit 15 which is connected to a receiver 16 and to one or more circuits 17 for preventing the engine E of the moped M from operating. The receiver 16 has a receiver antenna 18 for picking up the coded signals emitted by the emitter 3 and is arranged to provide corresponding enabling signals to the control unit 15. The prevention circuit 17 is constituted, for example, by a simple device for short-circuiting the ignition system of the engine E or additionally, or alternatively, by other devices for preventing the operation of functional parts of the engine E (fuel supply, starter device, etc).

The arrangement is such that the prevention circuit 17 is normally switched on: in other words, when no coded signals are received from the emitter 3 (due to the transmitter unit 1 being switched off as a result of the removal of the helmet H from the user's head, or due to its inability to pick up the coded signals emitted because the user has moved away from the moped M with the helmet H), the receiver unit 2 prevents the engine E from operating. However, when the coded signals are picked up by the receiver 16, the receiver unit 2 switches off the prevention circuit or circuits 17 by means of the unit 15, thus enabling the engine E to run normally.

The receiver unit 2 may also to advantage include an optical or acoustic warning device 19 which is arranged to be switched on by the control unit 15 when the preventing circuit or circuits 17 is or are switched on to indicate to the user that the engine E is prevented from operating by a failure to wear the helmet H and not by breakdown.

It is clear from the above description that the safety device according to the invention enables the moped M to be used only by a driver wearing the helmet H and switches off the engine E automatically when the helmet is removed or when the user moves some metres away from the moped. Thus, in addition to the enforced wearing of the helmet, the automatic switching off of the engine E by the device also has a useful theft-prevention or anti-robbery function and ensures, on the one hand, greater safety in the event of an accident in which the driver is thrown off the vehicle, and, on the other hand, greater convenience when the driver needs to dismount and leave the vehicle frequently.

Moreover, by virtue of the signal coding which is the operational basis of the device, there is a personalised combination of the helmet H with the moped M which reduces the risk of the latter being stolen by preventing it from being operated by a helmet H which emits signals with a different coding.

Naturally, although the invention has been described with reference to its application to a moped M, it can also be applied with equal advantage to motor cycles, or to any vehicles in general, for whose use the use of a protective helmet is necessary or suitable.

## Claims

1. A safety device for the users of vehicles, particularly mopeds, the driving of which makes the use of a protective helmet necessary or advisable, characterised in that it comprises means (15, 17) for preventing the operation of the vehicle (M) and means (3, 5, 10, 16), associated with the helmet (H), for deactivating the prevention means and operative only when the helmet is being worn.

2. A device according to Claim 1, characterised in that it comprises:
- a transmitter unit (1) incorporated in the helmet (H) and including electrical supply means (3) for emitting coded signals, sensor means (10) for detecting the fact that the helmet (H) is being worn, and a control unit (25) connected to the sensor means (10) and to the emitter means (3) and arranged to activate the emitter means (3) only when the sensor means (10) detect the fact that the helmet (H) is being worn,
- a receiver unit (2) fitted to the vehicle (M) and including an electrical supply, and means (16) for receiving the coded signals, means (17) for preventing the operation of the engine (E) of the vehicle (M) and a control unit (15) connected to the receiver means (16) and to the prevention means (17) and arranged to switch on the prevention means (17) in the absence of the coded signals.

3. A device according to Claim 2, characterised in that the electrical supply of the transmitter unit (1) is provided by a rechargeable buffer battery (7) and means (8, 9) for recharging the battery (7).

4. A device according to Claim 3, characterised in that the recharging means comprise solar cells (8) fitted to the helmet (H).

5. A device according to Claim 3, or Claim 4, characterised in that the recharging means comprise a charger (9) which can be connected to an external supply.

6. A device according to Claim 2, characterised in that the electrical supply of the transmitter unit (1) is provided by a supply of the vehicle (M).

7. A device according to Claim 2, characterised in that the sensor means (10) of the transmitter unit (1) include a capacitive sensor (11) for sensing the presence of a head inside the helmet (H).

8. A device according to Claim 2 or Claim 7, characterised in that the sensor means (10) of the transmitter unit (1) include an inductive sensor (12) for sensing the presence of a head in the helmet.

9. A device according to Claim 7 or Claim 8, characterised in that the sensor means (10) of the transmitter unit (1) also include means (13) for detecting the fact that the retaining members of the helmet (H) are fastened.

10. A device according to Claim 2, characterised in that the prevention means of the receiver unit (2) comprise at least a device (17) for short-circuiting the ignition system of the vehicle (M).

11. A device according to Claim 2, characterised in that the receiver unit (2) also includes a warning device (19) connected to the control unit (15), for indicating that the prevention means (17) are switched on.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| P,X | WO-A-8805637 (J. DEMIR)<br>* page 6, line 9 - page 9, line 38 *<br>* claims 1-18; figures 1-10 *<br>--- | 1-11 | A42B3/00<br>F16P3/00 |
| P,X | WO-A-8902560 (E. BREANT)<br>* page 2, line 29 - page 6, line 20 *<br>* claims 1-10; figures 1-3 *<br>--- | 1-11 | |
| A | GB-A-1468323 (E. H. ZINER)<br>--- | | |
| A | FR-A-2374586 (J.-J. LEDERREY)<br>--- | | |
| A | FR-A-2420716 (ELIMEX S.A.)<br>--- | | |
| A | FR-A-2298146 (REGIE NATIONALE DES USINES RENAULT)<br>--- | | |
| A | FR-A-2212756 (J.-L. RAYMOND)<br>--- | | |
| A | US-A-3748639 (T. J. L. DOBEDOE ET AL.)<br>--- | | TECHNICAL FIELDS SEARCHED (Int. Cl.4 ) |
| A | CA-A-1094154 (S. CRESPY)<br>----- | | A42B<br>F16P<br>B23Q<br>B60R |

The present search report has been drawn up for all claims

| Place of search | Date of completion of the search | Examiner |
|---|---|---|
| THE HAGUE | 21 SEPTEMBER 1989 | BOURSEAU A.M. |